# EUROPÄISCHE PATENTSCHRIFT

(11) **EP 2 272 651 B1**
(45) Veröffentlichungstag und Bekanntmachung des Hinweises auf die Patenterteilung: **16.05.2012**
(21) Anmeldenummer: 09008998.8
(22) Anmeldetag: 10.07.2009
(51) Int. Cl.: B29C 47/60, B29C 47/64, B01F 7/10, B29B 7/48, B29C 47/40

(54) **Schneckenmaschine mit Dehn-Knetelement**
Screw machine with dispersive mixing element
Machine à vis sans fin avec élément de malaxage dispersif

(43) Veröffentlichungstag der Anmeldung: 12.01.2011
(73) Patentinhaber: Coperion GmbH, 70469 Stuttgart (DE)
(72) Erfinder: Sämann, Hans-Joachim, 74321 Bietigheim-Bissingen (DE)
(74) Vertreter: Rau, Manfred

(56) Entgegenhaltungen:
- EP-A1- 0 330 308
- EP-A1- 0 422 272
- EP-A2- 0 875 356
- WO-A1-00/20189
- WO-A1-00/44548
- WO-A1-2008/065860
- US-A1- 2005 013 192
- POTENTE H ET AL: "MISCHELEMENTE IN NEUEN GEOMETRIEN" KUNSTSTOFFE, CARL HANSER VERLAG, MUNCHEN, DE, Bd. 88, Nr. 4, 1. April 1998 (1998-04-01), Seiten 494-496,498/4, XP000765242 ISSN: 0023-5563

## Beschreibung

Die Erfindung betrifft eine Schneckenmaschine, insbesondere einen Extruder, nach dem Oberbegriff des Anspruchs 1.

Derartige Schneckenmaschinen werden zur Aufbereitung von Kunststoffmaterialien verwendet und sind beispielsweise aus der EP 0 522 390 B2 bekannt. Das aufzubereitende Kunststoffmaterial wird in diesen Schneckenmaschinen Scherströmungen unterworfen und so aufgeschmolzen, durchmischt und homogenisiert. Zur Vermeidung von thermisch schädlichen Scherspitzen weisen die Knetscheiben der EP 0 522 390 B2 einen durch Werkstoffabtrag erzeugten vergrößerten Durchtrittsquerschnitt in Axialrichtung auf. Nachteilig ist, dass Kunststoffmaterialien mit hochmolekularen Partikeln mit den aufgezwungenen Scherströmungen nur unzureichend homogenisiert werden können, wodurch sogenannte Stippen - auch "White Spots" genannt - in den Materialien verbleiben.

Aus der WO 00/20189 A1 ist eine Schneckenmaschine mit Knetscheiben bekannt, die im Kammbereich eine gegenüber dem Flankenbereich verminderte Dicke in Axialrichtung aufweisen. Hierdurch wird zur Reduzierung des Energieeintrags in das aufzubereitende Material ein vergrößerter Kanal gebildet.

Aus der EP 0 422 721 A1 ist eine Schneckenmaschine mit Knetscheiben bekannt, die durch einen Werkstoffabtrag eine vergrößerte Durchlassöffnung ausbilden. Hierdurch wird eine optimale Antriebsenergie in das aufzubereitende Material eingebracht. Zudem wird eine partielle mechanischthermische Überbeanspruchung des Materials vermieden.

Aus der EP 0 330 308 A1 ist eine Schneckenmaschine mit Mischelementen bekannt, die eine unterschiedliche Anzahl an Kammbereichen an beiden Seiten aufweisen. Hierdurch werden die Mischeigenschaften der Mischelemente verbessert.

Aus der WO 2008/065 860 A1 ist eine Schneckenmaschine mit Knetelementen bekannt, die zur Vermeidung einer ungleichmäßigen Last in spezieller Weise zueinander angeordnet sind.

Aus der WO 00/44548 A1 ist eine Einwellen-Schneckenmaschine bekannt, deren Schneckenwelle mit einer inneren Oberfläche des Gehäuses einen Kanal für das aufzubereitende Material ausbildet. Durch diesen Kanal werden die Mischeigenschaften der Schneckenmaschine verbessert.

Der Erfindung liegt daher die Aufgabe zugrunde, eine Schneckenmaschine der gattungsgemäßen Art so weiterzubilden, dass auch Kunststoffmaterialien mit hochmolekularen Partikeln ausreichend homogenisiert und sogenannte Stippen vermieden werden können.

Diese Aufgabe wird erfindungsgemäß durch eine Schneckenmaschine mit den Merkmalen des Anspruchs 1 gelöst. Durch das erfindungsgemäße Dehn-Knetelement kann das aufzubereitende Material während des Aufschmelzens einer Dehnströmung unterworfen werden, durch die auch Materialien misch- und homogenisierbar sind, die durch Scherströmungen nicht ausreichend misch- und homogenisierbar sind. Derartige Materialien sind beispielsweise inhomogene Polymerschmelzen, die noch hochmolekulare Partikel enthalten. Das Dehn-Knetelement ermöglicht aufgrund seiner Ausbildung ein gleichzeitiges Aufschmelzen und Dehnen des Materials, wodurch die hochmolekulare Partikel effektiv zerteilt und das Material entsprechend homogenisiert wird. Die Dehnung des Materials erfolgt im Bereich zwischen den Zwickeln, wo das Dehn-Knetelement zusammen mit benachbarten Behandlungselementen einen Dehnkanal ausbildet. Da sich der Dehnkanal entgegen der Drehrichtung des Dehn-Knetelements im Querschnitt verjüngt, also in der Strömungsrichtung des Materials im Querschnitt verjüngt, weist das Material beim Eintritt in den Dehnkanal eine niedrigere Strömungsgeschwindigkeit als beim Austritt aus dem Dehnkanal auf, wodurch das Material entlang des Dehnkanals beschleunigt und so in der Strömungsrichtung gedehnt wird. Die Verjüngung des Dehnkanals von dem Eintrittsquerschnitt zu dem Austrittsquerschnitt kann prinzipiell mit einer beliebigen Geometrie des Dehn-Knetelements im Kammbereich erzielt werden. Das Dehn-Knetelement ist vorzugsweise als Scheibe ausgebildet. Die Ausbildung des Dehn-Knetelements stellt sicher, dass ein durchgehender Dehnkanal ausgebildet wird, wenn der Kammbereich in einer Drehstellung mittig zwischen den Zwickeln angeordnet ist. Zudem führt die Ausbildung des Dehn-Knetlements zu einer optimierten Homogenisierungswirkung.

Eine Ausbildung des Dehn-Knetelements nach Anspruch 2 führt zu einer optimierten Homogenisierungswirkung.

Eine Ausbildung nach Anspruch 3 und 4 führt zu einer optimierten Homogenisierwirkung. Darüber hinaus wird ein optimales Verhältnis von Dehnung, Scherung und axialer Förderwirkung des Materials erzielt.

Eine Ausbildung nach Anspruch 5 gewährleistet eine optimale Dehnströmung. Durch das Verhältnis von kleinster Dicke zu größter Dicke im Kammbereich kann im Wesentlichen die Differenz zwischen den Strömungsgeschwindigkeiten beim Eintritt in den Dehnkanal und beim Austritt aus dem Dehnkanal eingestellt werden. Da aus dieser Differenz bzw. Beschleunigung des Materials dessen Dehnung resultiert, kann auf diese Weise die Dehnung des Materials eingestellt werden.

Eine Ausbildung nach Anspruch 6 gewährleistet einen ausreichend großen Austrittsquerschnitt des Dehnkanals, sodass eine maximal zulässige Strömungsgeschwindigkeit beim Austritt aus dem Dehnkanal bzw. eine maximal zulässige Beschleunigung im Dehnkanal nicht überschritten wird.

Eine Ausbildung nach Anspruch 7 und 8 führt zu einer optimierten Homogenisierwirkung.

Durch eine Ausbildung nach Anspruch 9 kann eine Dehn-Knetzone in Abhängigkeit des aufzubereitenden Materials flexibel konfiguriert werden. Vorzugsweise werden mehrere Dehn-Knetelemente auf den Wellen unmittelbar hintereinander und/oder nebeneinander angeordnet.

Eine Schneckenmaschine nach Anspruch 10 ist einfach montierbar.

Weitere Merkmale, Vorteile und Einzelheiten der Erfindung ergeben sich aus der nachfolgenden Beschreibung eines Ausführungsbeispiels. Es zeigen:

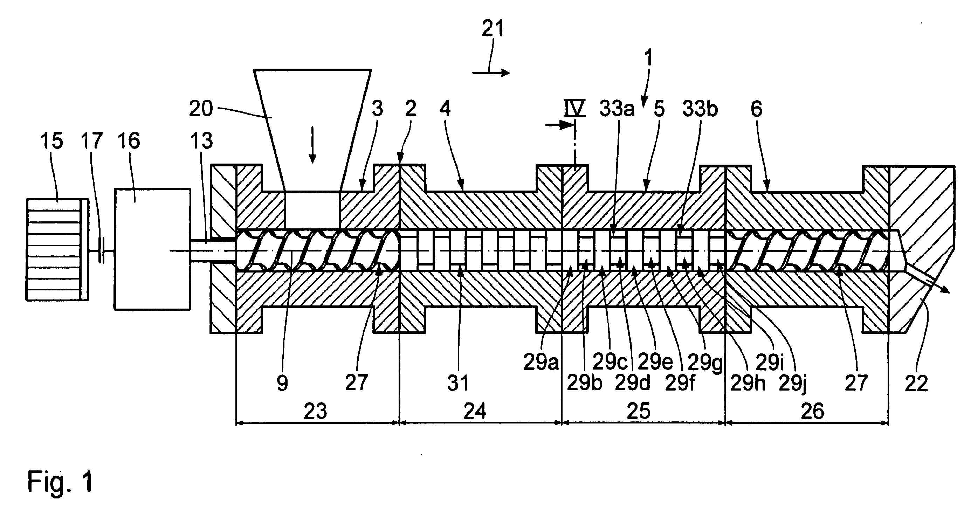

- Fig. 1: eine schematische Darstellung einer als Extruder ausgebil- deten Schneckenmaschine,

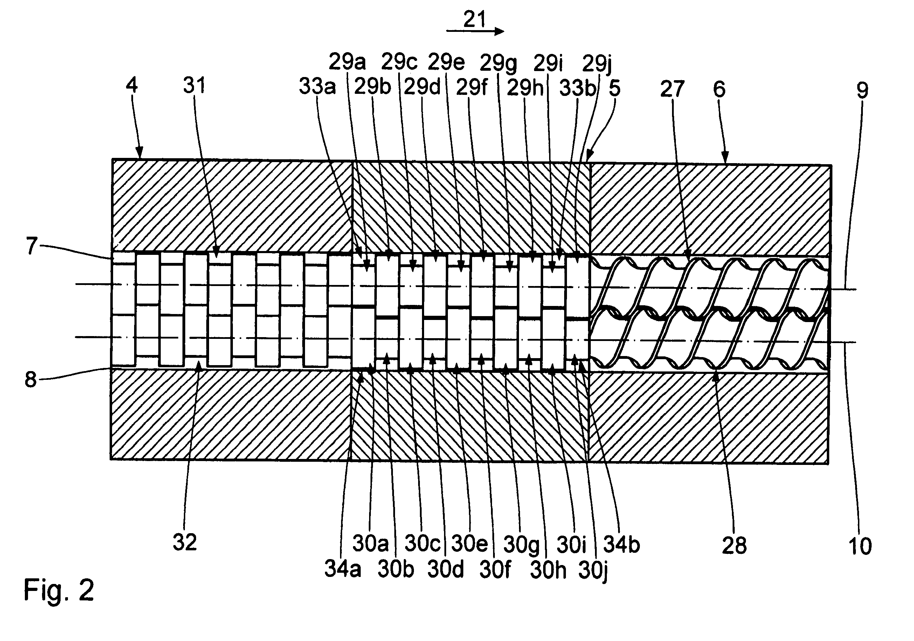

- Fig. 2: einen horizontalen Teil-Längsschnitt durch den Extruder in Fig. 1,
- Fig. 3: eine perspektivische Darstellung einer Dehn-Knetzone des Extruders in Fig. 1,
- Fig. 4: einen vertikalen Querschnitt durch die Dehn-Knetzone des Extruders gemäß der Schnittlinie IV-IV in Fig. 1,
- Fig. 5: eine horizontal geschnittene Draufsicht auf die Dehn- Knetzone in Fig. 2,

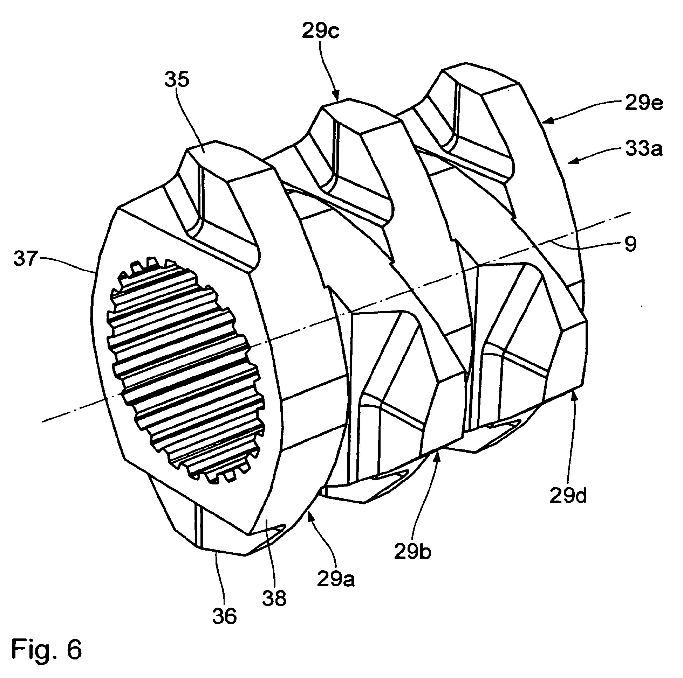

- Fig. 6: eine perspektivische Darstellung eines Dehn-Knetblocks des Extruders,

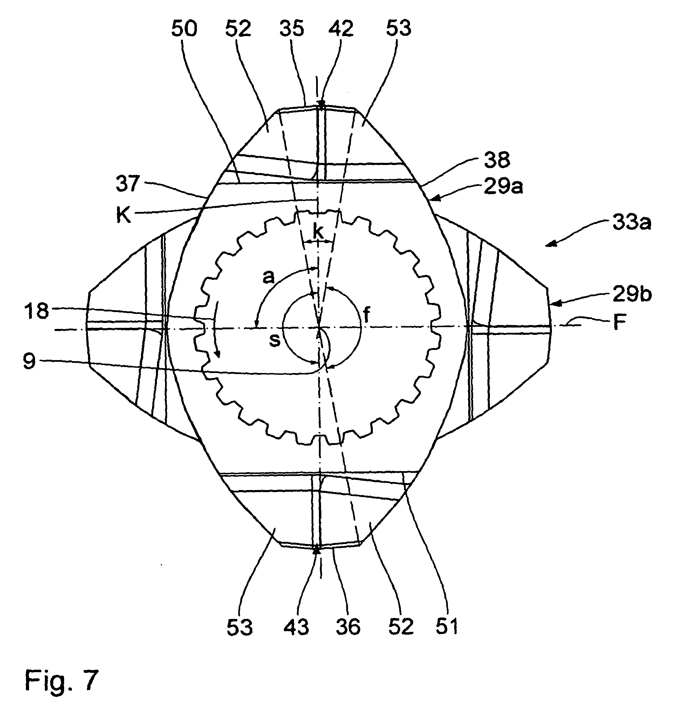

- Fig. 7: eine Frontansicht des Dehn-Knetblocks in Fig. 6, und
- Fig. 8: eine Seitenansicht des Dehn-Knetblocks in Fig. 6.

Eine als Zweiwellen-Extruder ausgebildete Schneckenmaschine 1 weist ein Gehäuse 2 aus mehreren hintereinander angeordneten und als Gehäuseschüssen bezeichneten Gehäuseabschnitten 3, 4, 5, 6 auf. Im Gehäuse 2 ist eine erste Gehäusebohrung 7 und eine diese durchdringende zweite Gehäusebohrung 8 ausgebildet, deren zugehörige Achsen 9, 10 parallel zueinander verlaufen. Im Durchdringungsbereich der Gehäusebohrungen 7, 8 weisen die Gehäuseabschnitte 3 bis 6 einen oberen ersten Zwickel 11 und einen entsprechend ausgebildeten unteren zweiten Zwickel 12 auf.

In den Gehäusebohrungen 7, 8 sind konzentrisch zu der jeweils zugehörigen Achse 9, 10 Wellen 13, 14 angeordnet, die von einem Antriebsmotor 15 drehantreibbar sind. Zwischen den Wellen 13, 14 und dem Antriebsmotor 15 ist ein Verzweigungsgetriebe 16 angeordnet, wobei wiederum zwischen dem Antriebsmotor 15 und dem Verzweigungsgetriebe 16 eine Kupplung 17 angeordnet ist. Die Wellen 13, 14 werden gleichsinnig, also in gleichen Drehrichtungen 18, 19 angetrieben.

Auf dem dem Verzweigungsgetriebe 16 benachbarten ersten Gehäuseabschnitt 3 ist eine Materialzuführung 20 in Form eines Trichters angeordnet, durch den aufzubereitendes bzw. zu bearbeitendes Kunststoffmaterial in die Gehäusebohrungen 7, 8 eingegeben werden kann. Das Material wird in einer Förderrichtung 21 von dem ersten Gehäuseabschnitt 3 bis zu dem letzten Gehäuseabschnitt 6 durch das Gehäuse 2 gefördert und verlässt den Extruder 1 beispielsweise durch eine das Gehäuse 2 abschließende Düsenplatte 22.

Der Extruder 1 weist in Förderrichtung 21 hintereinander eine Einzugszone 23, eine Aufschmelzzone 24, eine Dehn-Knetzone 25 und eine Druckaufbauzone 26 auf. Auf den als Zahnwellen ausgebildeten Wellen 13, 14 sind - in Förderrichtung 21 hintereinander - jeweils einander paarweise zugeordnete gleich ausgebildete Schneckenelemente 27, 28, Knetelemente 31, 32, Dehn-Knetelemente 29, 30 und wiederum Schneckenelemente 27, 28 jeweils als Behandlungselemente angeordnet. Sowohl die Schneckenelemente 27, 28 und die Knetelemente 31, 32 als auch die Dehn-Knetelemente 29, 30 greifen ineinander, sind also dicht kämmend ausgebildet.

Die Dehn-Knetelemente 29, 30 werden nachfolgend entsprechend ihrer Anordnung auf der ersten Welle 13 oder der zweiten Wellen 14 als erste

Dehn-Knetelemente 29 und zweite Dehn-Knetelemente 30 unterschieden. Auf der ersten Welle 13 sind zehn erste Dehn-Knetelemente 29a bis 29j unmittelbar hintereinander angeordnet, wobei jeweils fünfDehn-Knetelemente 29a bis 29e und 29f bis 29j einteilig als hintereinander angeordnete erste Dehn-Knetblöcke 33a und 33b ausgebildet sind. In entsprechender Weise sind auf der zweiten Welle 14 zehn zweite Dehn-Knetelemente 30a bis 30j angeordnet, wobei jeweils fünf zweite Dehn-Knetelemente 30a bis 30e und 30f bis 30j einteilig als hintereinander angeordnete zweite Dehn-Knetblöcke 34a und 34b ausgebildet sind.

Die Dehn-Knetblöcke 33a und 33b bzw. 34a und 34b sind derart ausgebildet und relativ zueinander auf den Wellen 13, 14 angeordnet, dass jeweils zwei unmittelbar hintereinander angeordnete Dehn-Knetelemente 29a bis 29j bzw. 30a bis 30j einen Versatzwinkel a um die jeweilige Achse 9, 10 von 90° aufweisen.

Die Dehn-Knetelemente 29a bis 30j sind identisch ausgebildet, sodass nachfolgend lediglich das Dehn-Knetelement 29a genauer beschrieben ist. Das Dehn-Knetelement 29a ist als zweigängige Scheibe ausgebildet und weist dementsprechend zwei Kämme 35, 36 mit einem Kammwinkel k und zwei Flanken 37, 38 mit einem Flankenwinkel f auf. Mittig durch die Kämme 35, 36 und die Achse 9 verläuft eine Kamm-Mittelebene K. Entsprechend verläuft mittig durch die Flanken 37, 38 und die Achse 9 eine Flanken-Mittelebene F. Das Dehn-Knetelement 29a ist mit einem Symmetriewinkel s von 180° rotationssymmetrisch um die Achse 9 ausgebildet.

Das Dehn-Knetelement 29a weist in Kammbereichen 39, 40 eine Dicke D_{K} in Axialrichtung auf, die gegenüber einer Dicke D_{F} eines Flankenbereichs 41 vermindert ist. Hierzu sind die der Materialzuführung 20 zugewandten Kammbereich-Frontseiten 42, 43 relativ zu einer Flankenbereich-Frontseite 44 in Axialrichtung zurückspringend ausgebildet, sodass in den Kammbereichen 39, 40 Dehnausnehmungen 45, 46 gebildet sind. Die der Materialzuführung 20 abgewandten Kammbereich-Rückseiten 47, 48 sind mit einer Flankenbereich-Rückseite 49 fluchtend ausgebildet. Durch die Dehnausnehmungen 45, 46 werden Kammbereich-Böden 50, 51 ausgebildet, die im Wesentlichen parallel zu der Flanken-Mittelebene F und senkrecht zu der Kamm-Mittelebene K verlaufen. Die Dicke D_{K} in den Kammbereichen 39, 40 ist ausgehend von der ersten Flanke 37 über den gesamten Kammwinkel k bis zu der zweiten Flanke 38 im Vergleich zu der Dicke D_{F} vermindert, sodass sich die Dehnausnehmungen 45, 46 über die gesamten Kammbereiche 39, 40 erstrecken. Die Kammbereich-Frontseite 42 verläuft in einem der Flanke 37 zugewandten ersten Abschnitt 52 relativ zu der Kammbereich-Rückseite 47 entgegen der Drehrichtung 18 schräg ansteigend. Ein der Flanke 38 zugewandter zweiter Abschnitt 53 verläuft im Wesentlichen parallel zu der Kammbereich-Rückseite 47. Entsprechend verläuft der erste Abschnitt 52 der Kammbereich-Frontseite 43 relativ zu der Kammbereich-Rückseite 48 schräg ansteigend und der der Flanke 37 zugewandte zweite Abschnitt 53 im Wesentlichen parallel zu der Kammbereich-Rückseite 48.

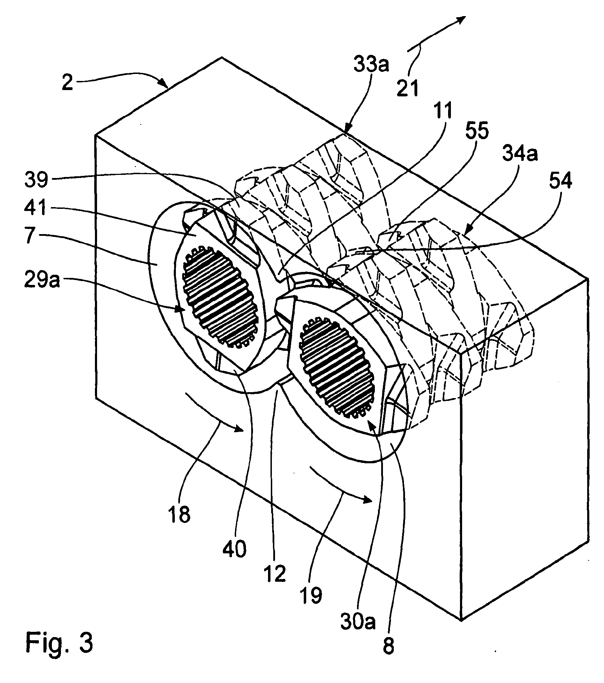

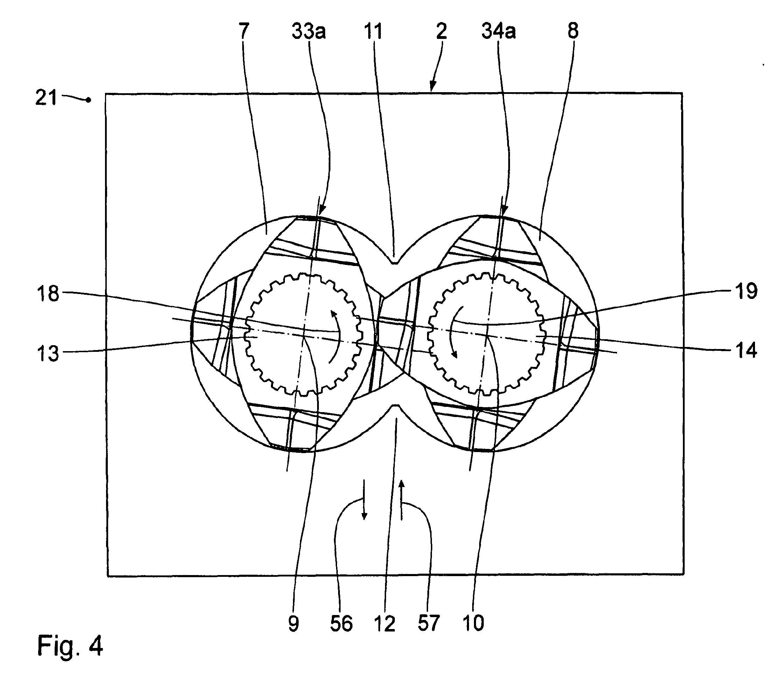

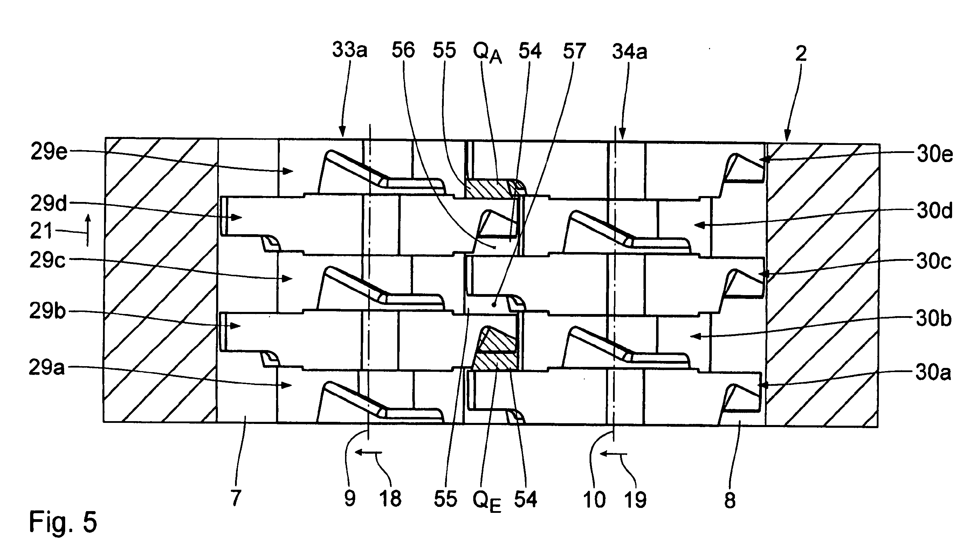

Befindet sich ein Teil der Dehn-Knetelemente 29a bis 30j in einer Drehstellung, in der sich deren Kammbereiche 39, 40 zwischen den Zwickeln 11, 12 befinden, bilden Gruppen von jeweils drei Dehn-Knetelementen 29a bis 30j Dehnkanäle 54, 55 für das aufzubereitende Material im Bereich zwischen den Zwickeln 11, 12 aus. Dies ist beispielhaft für die in den Fig. 3 und 4 gezeigte Drehstellung in Fig. 5 veranschaulicht.

In der in Fig. 5 gezeigten Drehstellung der Dehn-Knetelemente 29a bis 30j bildet jedes der ersten Dehn-Knetelemente 29b, 29d, 29f, 29h, 29j mit dem jeweils entsprechenden zweiten Dehn-Knetelement 30b, 30d, 30f, 30h, 30j und dem diesen vorangehenden zweiten Dehn-Knetelement 30a, 30c, 30e, 30g, 30i einen ersten Dehnkanal 54 aus. Weiterhin bildet jedes der zweiten Dehn-Knetelemente 30c, 30e, 30g, 30i mit dem jeweils entsprechenden ersten Dehn-Knetelement 29c, 29e, 29g, 29i und dem diesen vorangehenden ersten Dehn-Knetelement 29b, 29d, 29f, 29h einen zweiten Dehnkanal 55 aus. In einer im Vergleich zu Fig. 5 um 90° in den Drehrichtungen 18, 19 gedrehten Drehstellung bildet jedes der ersten Dehn-Knetelemente 29c, 29e, 29g, 29i mit dem jeweils entsprechenden zweiten Dehn-Knetelement 30c, 30e, 30g, 30i und dem diesen vorangehenden zweiten Dehn-Knetelement 30b, 30d, 30f, 30h einen ersten Dehnkanal 54 aus. Weiterhin bildet in dieser Drehstellung jedes der zweiten Dehn-Knetelemente 30b, 30d, 30f, 30h, 30j mit dem jeweils entsprechenden ersten Dehn-Knetelement 29b, 29d, 29f, 29h, 29j und dem diesen vorangehenden ersten Dehn-Knetelement 29a, 29c, 29e, 29g, 29i einen zweiten Dehnkanal 55 aus. Die Kammbereiche 39, 40 führen aufgrund des Verlaufs der Kammbereich-Frontseiten 42, 43 dazu, dass sich die gebildeten Dehnkanäle 54, 55 entgegen der jeweiligen Drehrichtung 18, 19 im Querschnitt Q verjüngen. Das bedeutet, dass sich die Dehnkanäle 54, 55 in den Strömungsrichtungen 56, 57 des Materials im Querschnitt Q verjüngen. Die Dehnkanäle 54, 55 weisen dementsprechend für das Material einen Austrittsquerschnitt Q_{A} auf, der im Vergleich zu einem Eintrittsquerschnitt Q_{E} kleiner ist. Die Strömungsrichtungen 56, 57 im Bereich zwischen den Zwickeln 11, 12 sind den Drehrichtungen 18, 19 in diesem Bereich entgegengerichtet. Dementsprechend ist die Strömungsrichtung 56 in den ersten Dehnkanälen 54 von dem ersten Zwickel 11 zu dem zweiten Zwickel 12 gerichtet, wohingegen die Strömungsrichtung 57 in den zweiten Dehnkanälen 55 von dem zweiten Zwickel 12 zu dem ersten Zwickel 11 gerichtet ist. Die Strömungsrichtungen 56, 57 verlaufen im Wesentlichen parallel zu der Flanken-Mittelebene F, also senkrecht zu der Kamm-Mittelebene K und tangential zu den Kämmen 35, 36.

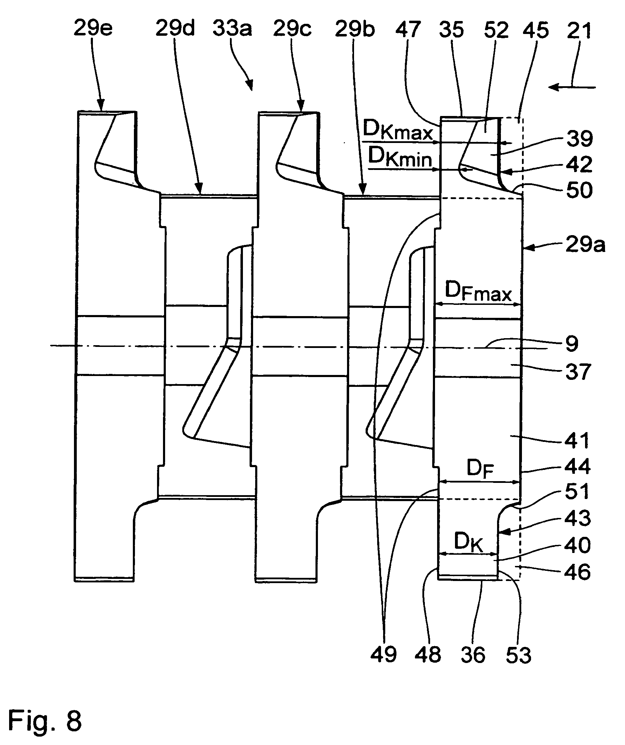

Das Verhältnis von kleinster Dicke D_{Kmin} zu größter Dicke D_{Kmax} in Axialrichtung in den Kammbereichen 39, 40 liegt im Bereich von 1/10 bis 9/10, insbesondere im Bereich von 2/10 bis 8/10, und insbesondere im Bereich von 3/10 bis 7/10 . Weiterhin liegt das Verhältnis von größter Dicke D_{Kmax} in den Kammbereichen 39, 40 zu größter Dicke D_{Fmax} im Flankenbereich 41 im Bereich von 3/10 bis 9/10, insbesondere im Bereich von 4/10 bis 8/10, und insbesondere im Bereich von 6/10 bis 8/10. Wie aus Fig. 8 ersichtlich ist, beträgt das Verhältnis von kleinster Dicke D_{Kmin} zu größter Dicke D_{Kmax} im vorliegenden Ausführungsbeispiel ungefähr 1/3 und das Verhältnis von größter Dicke D_{Kmax} in den Kammbereichen 39, 40 zu größter Dicke D_{Fmax} in dem Flankenbereich 41 ungefähr 3/4.

Die Funktionsweise des Extruders 1 ist wie folgt:

Das aufzubereitende Material wird über die Materialzuführung 20 in die Einzugszone 23 gegeben und von dort in Förderrichtung 21 in die Aufschmelzzone 24 und weiter in die Dehn-Knetzone 25 gefördert. In der Aufschmelzzone 24 und der Dehn-Knetzone 25 wird das feste Material durch aufgezwungene Scherströmungen aufgeschmolzen, wobei dieses in der Dehn-Knetzone 25 zusätzlich Dehnströmungen unterworfen wird, wodurch hochmolekulare Partikel des Materials aufgrund der Dehnung zerteilt werden und das Material so homogenisiert wird. Die Dehnströmungen werden in den Dehnkanälen 54, 55 erzeugt, wo das Material aufgrund des sich in der jeweiligen Strömungsrichtung 56, 57 verjüngenden Querschnitts Q beschleunigt und so gedehnt wird. Nachdem das Material in der Dehn-Knetzone 25 Scher- und Dehnströmungen unterworfen wurde, erfolgt in der Druckaufbauzone 26 ein Druckaufbau im Material, um dieses anschließend durch die Düsenplatte 22 auszutragen.

Die Dehn-Knetelemente 29a bis 30j können prinzipiell in den Kammbereichen 39, 40 eine beliebige Geometrie aufweisen, solange in dem Bereich zwischen den Zwickeln 11, 12 ein sich in der Strömungsrichtung 56, 57 des Materials verjüngender Dehnkanal 54, 55 ausgebildet wird. Insbesondere können die Kammbereich-Frontseiten 42, 43 teilweise oder ganz linear schräg oder konvex oder konkav gekrümmt relativ zu den Kammbereich-Rückseiten 47, 48 verlaufen.

## Patentansprüche

1. Schneckenmaschine mit
- einem Gehäuse (2),
- zwei Gehäusebohrungen (7, 8), die
-- zueinender parallele Achsen (9, 10) aufweisen und
-- einander unter Bildung von Zwickeln (11, 12) durchdringen,
- einer ersten und einer zweiten Welle (13, 14), die
-- in den Gehäusebohrungen (7, 8) konzentrisch zu der jeweils zugehörigen Achse (9, 10) angeordnet sind, und
- mehreren ersten und zweiten Behandlungselementen (27, 28, 29, 30, 31, 32) zur Behandlung von Material, die
-- in Axialrichtung hintereinander auf der jeweils zugehörigen ersten und zweiten Welle (13, 14) drehfest angeordnet sind und
-- miteinander dicht kämmend ausgebildet sind,
wobei
- mindestens eines der Behandlungselemente (27, 28, 29, 30, 31, 32) zur Dehnung des Materials in dessen Strömungsrichtung (56, 57) als Dehn-Knetelement (29, 30) ausgebildet ist,
-- wobei ein Kammbereich (39, 40) des Dehn-Knetelements (29, 30) eine gegenüber einem Flankenbereich (41) verminderte Dicke (D_{K}) in Axialrichtung aufweist und eine einer Materialzuführung (20) zugewandte Kammbereich-Frontseite (42, 43) relativ zu einer Flankenbereich-Frontseite (44) in Axialrichtung zurückspringend ausgebildet ist, und
-- wobei die Dicke (D_{K}) in dem Kammbereich (39, 40) ausgehend von einer ersten Flanke (37) des Dehn-Knetelements (29, 30) bis zu einer zweiten Flanke (38) vermindert ist und der Kammbereich (39, 40) zusammen mit benachbarten Behandlungselementen (29, 30) einen Dehnkanal (54, 55) für das Material im Bereich zwischen den Zwickeln (11, 12) ausbildet,
**dadurch gekennzeichnet, dass**
der Kammbereich (39, 40) zur Dehnung des Materials in dessen Strömungsrichtung (56, 57) derart ausgebildet ist, dass sich der Dehnkanal (54, 55) entgegen der Drehrichtung (18, 19) im Querschnitt (Q) verjüngt und dass der Dehnkanal (54, 55) für das Material einen Austrittsquerschnitt (Q_{A}) aufweist, der im Vergleich zu einem Eintrittsquerschnitt (Q_{E}) kleiner ist.

2. Schneckenmaschine nach Anspruch 1, **dadurch gekennzeichnet, dass** eine einer Materialzuführung (20) abgewandte Kammbereich-Rückseite (47, 48) und eine Flankenbereich-Rückseite (49) fluchtend miteinander ausgebildet sind.

3. Schneckenmaschine nach Anspruch 1 oder 2, **dadurch gekennzeichnet, dass**
ein Kammbereich-Boden (50, 51) im Wesentlichen parallel zu einer Flanken-Mittelebene (F) ausgebildet ist.

4. Schneckenmaschine nach einem der Ansprüche 1 bis 3, **dadurch gekennzeichnet, dass**
die Kammbereich-Frontseite (42, 43) entgegen die Drehrichtung (18, 19) relativ zu der Kammbereich-Rückseite (47, 48) schräg ansteigend ausgebildet ist.

5. Schneckenmaschine nach einem der Ansprüche 1 bis 4, **dadurch gekennzeichnet, dass**
das Verhältnis von kleinster Dicke (D_{Kmin}) zu größter Dicke (D_{Kmax}) im Kammbereich (39, 40) im Bereich von 1/10 bis 9/10, insbesondere im Bereich von 2/10 bis 8/10, und insbesondere im Bereich von 3/10 bis 7/10 liegt.

6. Schneckenmaschine nach einem der Ansprüche 1 bis 5, **dadurch gekennzeichnet, dass**
das Verhältnis von größter Dicke (D_{Kmax}) im Kammbereich (39, 40) zu größter Dicke (D_{Fmax}) im Flankenbereich (41) im Bereich von 3/10 bis 9/10, insbesondere im Bereich von 4/10 bis 8/10, und insbesondere im Bereich von 6/10 bis 8/10 liegt.

7. Schneckenmaschine nach einem der Ansprüche 1 bis 6, **dadurch gekennzeichnet, dass**
das Dehn-Knetelement (29, 30) als ein- bis dreigängige Scheibe ausgebildet ist.

8. Schneckenmaschine nach Anspruch 7, **dadurch gekennzeichnet, dass** das Dehn-Knetelement (29, 30) als zweigängige Scheibe ausgebildet ist.

9. Schneckenmaschine nach einem der Ansprüche 1 bis 8, **dadurch gekennzeichnet, dass**
mehrere Dehn-Knetelemente (29, 30) unmittelbar hintereinander und nebeneinander auf den Wellen (13, 14) angeordnet sind.

10. Schneckenmaschine nach Anspruch 9, **dadurch gekennzeichnet, dass** mehrere Dehn-Knetelemente (29, 30) einteilig als Dehn-Knetblock (33, 34) ausgebildet sind.

## Claims

1. Screw machine with
- a housing (2),
- two housing bores (7, 8), which
-- have mutually parallel axes (9, 10) and
-- intersect one another with the formation of triangles (11, 12),
- a first and a second shaft (13, 14), which
-- are arranged in the housing bores (7, 8) concentrically with respectively associated axis (9, 10), and
- a plurality of first and second processing elements (27, 28, 29, 30, 31, 32) for processing material, which
-- are arranged rotatably fixed in an axial direction one behind the other on the respectively associated first and second shaft (13, 14) and
-- are configured tightly meshing with one another,
wherein
- at least one of the processing elements (27, 28, 29, 30, 31, 32) is configured to extend the material in a flow direction (56, 57) thereof as an extension-kneading element (29, 30),
-- wherein a crest region (39, 40) of the extension-kneading element (29, 30) has a thickness (D_{K}) in the axial direction, which is reduced relative to a flank region (41), and a crest region front side (42, 43) facing a material feed (20) is recessed in the axial direction relative to a flank region front side (44), and
-- wherein the thickness (D_{K}) in the crest region (39, 40) proceeding from a first flank (37) of the extension-kneading element (29, 30) up to a second flank (38) is reduced and the crest region (39, 40), together with adjacent processing elements (29, 30), forms an extension channel (54, 55) for the material in a region between the triangles (11, 12),
**characterized in that** the crest region (39, 40) is configured to extend the material in a flow direction (56, 57) thereof in such a way that the extension channel (54, 55) tapers in the cross section (Q) counter to a direction (18, 19) of rotation, and that the extension channel (54, 55) has, for the material, an outlet cross section (Q_{A}) which is smaller in comparison to an inlet cross section (Q_{E}).

2. Screw machine according to claim 1, **characterized in that** a crest region rear side (47, 48) remote from a material feed (20) and a flank region rear side (49) align with one another.

3. Screw machine according to claim 1 or 2, **characterized in that** a crest region base (50, 51) is substantially parallel to a flank center plane (F).

4. Screw machine according to any one of claims 1 to 3, **characterized in that**
the crest region front side (42, 43) is configured obliquely rising counter to the direction (18, 19) of rotation relative to a crest region rear side (47, 48).

5. Screw machine according to any one of claims 1 to 4, **characterized in that**
the ratio of a smallest thickness (D_{Kmin}) to a largest thickness (D_{Kmax}) in the crest region (39, 40) is in the range of 1/10 to 9/10, in particular in the range of 2/10 to 8/10, and in particular in the range of 3/10 to 7/10.

6. Screw machine according to any one of claims 1 to 5, **characterized in that**
the ratio of a largest thickness (D_{Kmax}) in the crest region (39, 40) to a largest thickness (D_{Fmax}) in the flank region (41) is in the range of 3/10 to 9/10, in particular in the range of 4/10 to 8/10, and in particular in the range of 6/10 to 8/10.

7. Screw machine according to any one of claims 1 to 6, **characterized in that**
the extension-kneading element (29, 30) is configured as a single-flight to triple-flight disc.

8. Screw machine according to claim 7, **characterized in that** the extension-kneading element (29, 30) is configured as a double-flight disc.

9. Screw machine according to any one of claims 1 to 8, **characterized in that**
a plurality of extension-kneading elements (29, 30) are arranged directly one behind the other and next to one another on the shafts (13. 14).

10. Screw machine according to claim 9, **characterized in that** a plurality of extension-kneading elements (29, 30) are configured in one piece as an extension-kneading block (33, 34).

## Revendications

1. Machine à vis sans fin comprenant
- un corps (2),
- deux alésages de corps (7, 8) qui
-- présentent des axes (9, 10) parallèles entre eux et
-- s'entrecroisent avec formation de zones d'interpénétration (11, 12),
- un premier et un second arbre (13, 14) qui
-- sont disposés de manière concentrique par rapport à leurs axes respectifs (9, 10) dans les alésages du corps (7, 8), et
- plusieurs premiers et seconds éléments de traitement (27, 28, 29, 30, 31, 32) pour le traitement d'un matériau, qui
-- sont disposés, solidement fixés, solidaires en rotation, l'un derrière l'autre en direction axiale, sur le premier et second arbre (13, 14) respectivement correspondant et
-- sont conçus sous la forme de dents de peigne très rapprochées,
où
- au moins l'un des éléments de traitement (27, 28, 29, 30, 31, 32) est sous la forme d'un élément d'étirage et de malaxage (29, 30) pour l'étirage du matériau dans sa direction d'écoulement (56, 57),
-- une zone en forme de peigne (39, 40) de l'élément d'étirage et de malaxage (29, 30) présentant une épaisseur (D_{K}) plus faible, en face d'une partie du flanc (41), dans la direction axiale, et présentant une face frontale de la zone en forme de peigne (42, 43), orientée vers l'alimentation en matière (20), conçue avec un retrait en direction axiale par rapport à une face frontale de la partie du flanc (44), et
-- l'épaisseur (D_{K}) dans la zone en forme de peigne (39, 40) étant diminuée en partant d'un premier flanc (37) de l'élément d'étirage et de malaxage (29, 30) jusqu'à un second flanc (38) et où la zone en forme de peigne (39, 40) formant conjointement, avec des éléments de traitement (29, 30) voisins, un chenal d'étirage (54, 55) pour le matériau dans la zone d'interpénétration (11, 12),
**caractérisée en ce que**
la zone en forme de peigne (39, 40) est conçue pour l'étirage de la matière dans la direction de son écoulement (56, 57) de telle sorte que le chenal d'étirage (54, 55) se rétrécit dans la section (Q) dans le sens opposé à la direction de rotation (18, 19), et que le chenal d'étirage (54, 55) présente une section de sortie (Q_{A}) pour le matériau qui est inférieure en comparaison à celle de la section d'entrée (Q_{E}).

2. Machine à vis sans fin selon la revendication 1 **caractérisée en ce**
**qu'**une face arrière de la zone en forme de peigne (47, 48), opposée à l'alimentation de la matière (20), et une face arrière de la zone des flancs (49) sont conçues alignées l'une à l'autre.

3. Machine à vis sans fin selon les revendications 1 ou 2 **caractérisée en ce**
**qu'**un socle de la zone en forme de peigne (50, 51) est conçu dans l'ensemble parallèle à un plan moyen des flancs (F).

4. Machine à vis sans fin selon l'une des revendications de 1 à 3, **caractérisée en ce que**
la face frontale de la zone en forme de peigne (42, 43) est conçue croissante, oblique dans le sens contraire à la direction de rotation (18, 19) par rapport à la face arrière de la zone en forme de peigne (47, 48).

5. Machine à vis sans fin selon l'une des revendications de 1 à 4 **caractérisée en ce que**
le rapport entre la plus petite épaisseur (D_{Kmin})) et l'épaisseur la plus grande (D_{Kmax}) dans la zone en forme de peigne (39, 40) se situe dans l'intervalle de 1/10 à 9/10, en particulier dans l'intervalle de 2/10 à 8/10, et plus particulièrement dans l'intervalle de 3/10 à 7/10.

6. Machine à vis sans fin selon l'une des revendications de 1 à 5 **caractérisée en ce que**
le rapport entre la plus grande épaisseur (D_{Kmax})) dans la zone en forme de peigne (39, 40) et l'épaisseur la plus grande (D_{Fmax}) dans la zone des flancs (41) se situe dans l'intervalle de 3/10 à 9/10, en particulier dans l'intervalle de 4/10 à 8/10, et plus particulièrement dans l'intervalle de 6/10 à 8/10.

7. Machine à vis sans fin selon l'une des revendications de 1 à 6 **caractérisée en ce que**
l'élément d'étirage et de malaxage (29, 30) est conçu comme un disque à base d'un à trois pas de lames.

8. Machine à vis sans fin selon la revendication 7 **caractérisée en ce que**
l'élément d'étirage et de malaxage (29, 30) est conçu sous la forme d'un disque avec deux pas de lames.

9. Machine à vis sans fin selon l'une des revendications de 1 à 8 **caractérisée en ce que**
plusieurs éléments d'étirage et de malaxage (29, 30) sont disposés immédiatement les uns derrière les autres et les uns à côté des autres sur les arbres (13, 14).

10. Machine à vis sans fin selon la revendication 9 **caractérisée en ce, que** plusieurs éléments d'étirage et de malaxage (39, 40) sont conçus en une pièce unique sous la forme d'un bloc d'étirage et de malaxage (33, 34).
